# EUROPEAN PATENT SPECIFICATION

(11) **EP 4 532 914 B1**
(45) Date of publication and mention of the grant of the patent: **08.07.2026**
(21) Application number: 22727242.4
(22) Date of filing: 24.05.2022
(51) Int. Cl.: F02D 19/08, F02P 5/15, F02D 37/02, F02D 23/00, F02D 35/02

(54) **METHOD FOR OPERATING AN INTERNAL COMBUSTION ENGINE**
VERFAHREN ZUM BETREIBEN EINER BRENNKRAFTMASCHINE
PROCÉDÉ DE FONCTIONNEMENT D'UN MOTEUR À COMBUSTION INTERNE

(43) Date of publication of application: 09.04.2025
(73) Proprietor: Innio Jenbacher GmbH & Co OG, 6200 Jenbach (AT)
(72) Inventor: HOCHFILZER, Bernadet, 6020 Innsbruck (AT); ARNOLD, Georg, 6020 Innsbruck (AT); ZUSCHNIG, Alexander, 6121 Baumkirchen (AT)
(74) Representative: Torggler & Hofmann Patentanwälte - Innsbruck
(86) International application number: PCT/AT2022/060178
(87) International publication number: WO 2023/225693

(56) References cited:
- DE-C- 909 521
- US-A1- 2002 029 770
- BARATTA MIRKO ET AL: "Performance and Emissions of a Turbocharged Spark Ignition Engine Fuelled with CNG and CNG/Hydrogen Blends", SAE 2010 COMMERCIAL VEHICLE ENGINEERING CONGRESS SAE TECHNICAL PAPERS, 8 April 2013 (2013-04-08), US, XP093014808, ISSN: 0148-7191, Retrieved from the Internet <URL:https://saemobilus.sae.org/content/2013-01-0866/> DOI: 10.4271/2013-01-0866
- MUNSHI S R ET AL: "Hydrogen Blended Natural Gas Operation of a Heavy Duty Turbocharged Lean Burn Spark Ignition Engine South Coast Air Quality Management District Downloaded from SAE International by European Patent Office", SAE 2010 COMMERCIAL VEHICLE ENGINEERING CONGRESS SAE TECHNICAL PAPERS, 25 October 2004 (2004-10-25), US, pages 1 - 17, XP093014877, ISSN: 0148-7191, Retrieved from the Internet <URL:https://saemobilus.sae.org/content/2004-01-2956> DOI: 10.4271/2004-01-2956

## Description

The present invention concerns a method for operating an internal combustion engine operated by a hydrogen containing fuel mixture with the features of the preamble of claim 1 and an internal combustion engine comprising a control unit.

Internal combustion engines, more specifically reciprocating internal combustion engines, as described herein are capable to burn individual fuel gases as well as mixtures of individual fuel gases as an air-fuel mixture.

It is commonly known by the state of the art to operate such internal combustion engines by fuel gases as natural gas, wherein the natural gas is for example delivered to the internal combustion engine by a public gas supply grid.

As the market offer of hydrogen increases continuously and the price of hydrogen decreases, it is expected in the future, that such fuel sources as natural gas from a public supply grid can be augmented by an amount of hydrogen, such that in the future sources such as natural gas grids can deliver fuel mixtures containing hydrogen of a certain amount.

Specifications for such measures are for example given by norms, i.e. ÖNORM EN 16726.

In this regard internal combustion engines supplied by such fuel sources have to be prepared for changing properties of fuels and fuel mixtures, wherein preferably the operating conditions of the internal combustion engine has to be adopted for an expected share of hydrogen in the delivered fuel mixture.

Such internal combustion engines and methods for operating internal combustion engines by fuel mixtures comprising hydrogen are known for example by DE 10 2016 225 031 A1 or US 2002/0029770 A1, wherein methods are disclosed to define a specific amount of hydrogen in a fuel-mixture and how to adjust the internal combustion engine to optimize the combustion process considering this defined specific hydrogen amount.

The document: Baratta Mirko ET AL: "Performance and Emissions of a Turbocharged Spark Ignition Engine Fuelled with CNG and CNG/ Hydrogen Blends",SAE 2010 COMMERCIAL VEHICLE ENGINEERING CONGRESS SAE TECHNICAL PAPERS, 8 April 2013 (2013-04-08), XP093014808,US DOI: 10.4271/2013-01-0866 discloses a method for operating a turbocharged spark ignition engine using compressed natural gas (CNG) and CNG/hydrogen blends. The engine is tested with varying hydrogen concentrations (0%, 15%, 25% by volume). The document describes monitoring engine performance and emissions, including ignition timing adjustments based on the hydrogen content in the fuel mixture, to optimise combustion and reduce emissions. However, it does not disclose estimating hydrogen content using in-cylinder pressure or exhaust gas temperature sensors.

But it is still a disadvantage that internal combustion engines are not designed to be operated by a second fuel differing from the first, as e.g. hydrogen differs from natural gas by its properties significantly.

Therefore, e.g. turbochargers of internal combustion engines operated by natural gas are designed by specific parameters given by the combustion process of natural gas, wherein temperature, volume flow and/or enthalpy of the exhaust gas are major aspects for the design, construction and/or dimensioning of an turbocharger to optimize the efficiency of the internal combustion engine.

Such specific parameters are strongly influenced by the type of fuel used in the combustion process, wherein already small differences of the mixing ratio of fuel mixtures or small amounts of differing fuels in a main fuel result in differences of the combustion parameters.

Therefore, a big disadvantage of the state of the art is that specific part of the internal combustion engine (e.g. turbochargers, compressors, exhaust treatment systems, and so on) are not designed, constructed and/or dimensioned to perform efficient work by varying fuels and/or fuel compositions.

The object of the invention is to provide a method for operating an internal combustion engine and an internal combustion engine, wherein the components of the internal combustion engine and/or the whole system of the internal combustion engine can be operated more efficient and/or more flexible to changing fuels or fuel compositions.

This object is achieved by a method for operating an internal combustion engine with the features of claim 1 and an internal combustion engine with the features of claim 12.

According to the invention, it is provided that the internal combustion engine is operated by an air-fuel mixture comprising a fuel mixture and, preferably charged, air, wherein the fuel mixture comprises a first fuel, preferably natural gas, and hydrogen as a second fuel different from the first fuel, wherein
- a hydrogen content of the fuel mixture is determined, and
- at least an ignition timing is adapted as a function of the hydrogen content of the fuel mixture independent of a target power output of the internal combustion engine,
wherein the higher the amount of hydrogen in the fuel mixture the later the ignition timing is set for at least partially compensating a shift of a center of combustion due to higher flame speed of hydrogen compared to the first fuel.

An increased amount of hydrogen in the fuel mixture of the internal combustion engine leads to a faster combustion. This effect is based on the different combustion properties of the different fuel admixed to the fuel mixture combusted in the internal combustion engine. As hydrogen has a very high laminar flame speed (compared to natural gas) the total combustion of the fuel mixture is faster if a higher content of hydrogen is present.

As the enthalpy and/or the exhaust temperature of an exhaust gas produced by the combustion process decreases if the same process is performed with a fuel mixture having a higher content of hydrogen, components of the internal combustion engine which are arranged in the path of the exhaust gas and which are powered by the exhaust gas do not receive the same energy anymore, wherein e.g. the turbine of an turbo charger cannot deliver as much energy to the compressor or an exhaust treatment system (mostly requiring a certain temperature - such as treatment systems comprising catalysts) cannot efficiently be operated.

By an embodiment of the invention, it is preferably provided that a hydrogen content of the fuel mixture provided to be combusted in the internal combustion engine is monitored and that the ignition timing is varied referring to a change of the hydrogen content.

In contrast to the state of the art the ignition timing is not varied directly referring to a changing hydrogen content to reach the best combustion efficiency, but instead the ignition timing is set in each case afterwards if the hydrogen content (the amount of hydrogen in the fuel mixture) increases to at least partially compensate a shift of the center of combustion due to higher flame speed of hydrogen compared to the first fuel.

Preferably the shift of the center of combustion is compensated essentially completely according to the invention, such that e.g. turbines and/or exhaust gas treatment systems can function as intended.

An internal combustion engine according to the invention is therefore capable of being operated as intended even if fuel mixtures are used which substantially alter the properties of the combustion.

The shift of the ignition timing results in increasing exhaust temperatures, wherein the enthalpy of the exhaust gas can be increased.

It should be mentioned that all statements regarding air fuel mixtures with "higher" or "lower" contents of hydrogen or other fuels are compared to each other assuming that the content is determined under same ambient conditions (temperature, pressure, etc.).

A fuel gas has to be understood, in particular, as a fuel which is gaseous under normal conditions, that is to say in particular at 25° C and 1013 mbar.

In particular, the fuel mixture can contain methane as the first fuel substance and hydrogen as the second fuel substance. The first fuel could for example be a burnable gas, such as gases containing methane and/or other hydrocarbons. The combustible first fuel can in particular be natural gas, liquefied natural gas (LNG), compressed natural gas (CNG) or another suitable combustible gas.

It is possible that the fuel mixture contains other combustible and/or non-combustible substances.

The main advantage of the present invention is therefore that an internal combustion engine can be provided which can be operated with only a first fuel and a combination of a first fuel and hydrogen at any mixture ratio between the first fuel and hydrogen, wherein components of the internal combustion engine can be operated effectively although they are not designed, calculated and/or constructed for the operation with a fuel mixture containing a first fuel and hydrogen.

The center of combustion can be measured for example by mass fraction burnt (MFB), such as the MFB50 (the time in the combustion in which 50% of the mass of the fuel is burnt; Source: Internal Combustion Engine Fundamentals, John B. Heywood).

To characterize the combustion process, the profile of the burned mass fraction as a function of the crank angle may be used. The rate at which fuel-air mixture burns generally increases from a low value immediately following the spark discharge to a maximum about halfway through the burning process and then generally decreases to close to zero as the combustion process ends. It may prove convenient to use these mass fraction burned fraction curves to characterize different stages of the spark-ignition engine combustion process by their duration in crank angles.

Parameters describing the center of combustion can for example be calculated from a pressure progression in the cylinder during combustion, measured by external sensors (e.g. a knock sensor) and/or internal sensors (in-cylinder pressure sensor).

Already present internal combustion engines can be upgraded and operated by a method according to the invention. Therefore, the invention can be used for the embodiments of the prior art already in the introduction of the description described.

The invention can particularly preferably be used in conjunction with internal combustion engine driving a generator for creating electrical energy. Such combinations of internal combustion engines driving a generator are known as gensets.

Advantageous embodiments are defined in the dependent claims.

In the gas mixture of first fuel, preferably natural gas, and hydrogen, for example, the fuel flow rate has to be increased as the ratio of hydrogen to first fuel is increased due to the lower energy density of hydrogen, as the internal combustion engine should be operated with the same power output.

It can be provided that the higher the amount of hydrogen in the fuel mixture the higher a boost pressure target value is set to meet a target NOx amount in the exhaust gas of the internal combustion engine.

It can be provided that a lambda value of the combustible air-fuel mixture supplied to the internal combustion engine is adapted during a change of the amount of hydrogen in the fuel mixture, preferably for at least partially - particular preferred completely - compensating the increase of the boost pressure without adapting an actual power output of the internal combustion engine.

It can be provided that a lambda value of the combustible air-fuel mixture supplied to the internal combustion engine is increased during an increase of the amount of hydrogen in the fuel mixture beyond an increase of a lambda value when using only the first fuel.

In other words, given a maximum lambda value for combustion with only the first fuel, it can be provided that the lambda value can be increased above the maximum lambda for the first fuel when the fuel mixture comprising the first fuel and the second fuel is combusted.

The mass flow of fuel mixture decreases because of increasing hydrogen content of the fuel mixture if the power output of the internal combustion engine should be constant, as the fuel density of hydrogen compared to the first fuel, preferably natural gas, is lower. Therefore, the enthalpy of the exhaust gas decreases as the mass flow decreases compared to a combustion with a lower content of hydrogen and the same power output of the internal combustion engine.

By an increase of the lambda value of the combustible air-fuel mixture supplied to the internal combustion engine during an increase of the amount of hydrogen in the fuel mixture beyond an increase of a lambda value when using only the first fuel the effect of a sinking enthalpy of the exhaust gas can be countered additionally, as the mass flow of the exhaust gas can be increased or kept constant by the increased lambda value. Furthermore, emissions, as e.g. NOx, can be decreased by the increasing lambda value.

It can be provided that depending on the amount of hydrogen in the fuel mixture a target NOx amount in the exhaust gas of the internal combustion engine is held constant or is adapted, preferably decreased.

It can be provided that the target NOx amount in the exhaust gas of the internal combustion engine is set below a target NOx amount compared to a target NOx amount when using only the first fuel.

It can be provided that the amount of fuel mixture is adapted to compensate the difference in a heating value of hydrogen compared to the first fuel, preferably natural gas, wherein in particular preferred embodiments a target power output of the internal combustion engine is controlled with a power controller, wherein the power controller is capable of adapting the amount of fuel mixture.

It can be provided that the boost pressure target value is adapted depending on the amount of hydrogen in the fuel mixture. Particularly preferably it can be provided that the higher the hydrogen amount in the fuel mixture the higher the boost pressure target value is set.

In consequence thereof an increase of the lambda value of the combustible air-fuel mixture supplied to the internal combustion engine leads to a decrease of the NOx amount in the exhaust gas in order to fulfill the hydrogen amount dependent target NOx amount in the exhaust gas of the internal combustion engine.

It can be provided that a boost pressure is adapted in a feedback control as a function of a continuously measured NOx content of the exhaust gas of the internal combustion engine.

It can be provided that a boost pressure or a boost pressure offset is adapted as a function of the amount of hydrogen in the fuel mixture.

It can be provided that the boost pressure or the boost pressure offset is adapted as a linear function of the amount of hydrogen in the fuel mixture.

It can be provided that a target NOx amount in the exhaust gas of the internal combustion engine is adapted as a function of the amount of hydrogen in the gas mixture.

It can be provided that the target NOx amount in the exhaust gas of the internal combustion engine is adapted as a linear function of the amount of hydrogen in the fuel mixture. It is also conceivable that the function is only partially linear having differing gradients.

It can be provided that the hydrogen content of the fuel mixture is determined, preferably continuously, by means of a hydrogen sensor.

It can be provided that the hydrogen content of the fuel mixture is determined continuously or periodically during operation of the internal combustion engine, preferably in real time, so that current information about the hydrogen content is obtained preferably at any time or at least at relevant time intervals.

It is provided that the hydrogen content of the fuel mixture is estimated, preferably continuously, by means of an in-cylinder pressure sensor.

The content of hydrogen in the gas mixture or the air-fuel mixture can be determined in a number of ways by analyzing one or more differentiable characteristics of the gas mixture supplied prior to combustion, by analyzing the combustion or the combustion results, wherein the hydrogen content can be detected directly (e.g. by a hydrogen sensor) or indirectly by monitoring combustion characteristics (as e.g. temperature, power output, exhaust gas content).

It can be provided that the fuel mixture supplied to the internal combustion engine comprises an amount of hydrogen in a range between 0 and 30 Vol. %, preferably between 0 and 25 Vol. %.

It can be provided that the fuel mixture supplied to the internal combustion engine comprises an amount of hydrogen of more than 30 Vol. %, e.g. up to 60 Vol. %. In principle, with the invention described it is possible to operate an internal combustion engine with any Vol. % of hydrogen admixed to a fuel different from hydrogen.

Furthermore, protection is sought for an internal combustion engine operated according to an embodiment of the invention.

The internal combustion engine can preferably be capable of operation with 100 % hydrogen as well as operation with the fuel mixture of the first fuel and hydrogen.

In particularly preferred embodiments the ignition timing under operation with 100 % hydrogen is set for at least partially compensating a shift of a center of combustion due to higher flame speed of hydrogen compared to the operation with the mixture of the first fuel and hydrogen.

Further details and advantages of the invention are apparent from the accompanying figures and the following description of the drawings. The figures show:
- Fig. 1: an internal combustion engine
- Fig. 2: an internal combustion engine operated by a method according to the invention
- Fig. 3: a diagram illustrating a method for operating an internal combustion engine during a change of a hydrogen content in the fuel mixture.

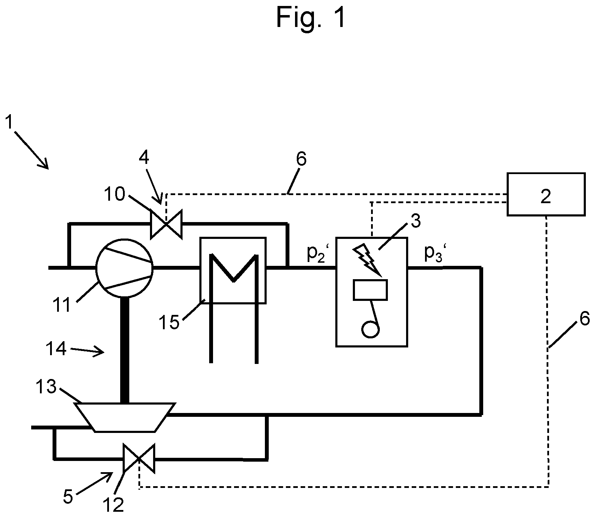

Fig. 1 illustrates a first embodiment of an internal combustion engine 1. This internal combustion engine has a combustion chamber 3 in which a fuel-air mixture is combusted.

This invention is, of course, not restricted to a single combustion chamber 3 and the combustion chamber 3 used in the Figures serves only as an example. The invention can be used on an internal combustion engine 1 for one or more combustion chambers 3 selectively and/or globally for all applications.

The fuel-air mixture is supplied to at least one combustion chamber through a compressor 11 of a turbocharger 14, wherein the fuel-air mixture can be cooled after compression by the compressor 11 in a mixture cooler 15.

The air-fuel mixture supplied can be mixed by a gas mixer (not illustrated in Fig. 1) upstream of the compressor 11, wherein a fuel or a fuel mixture - e.g. provided by a natural gas supply grid - can be mixed with air and passed to the compressor 11.

The mixture cooler 17 and the compressor 11 can be bypassed by means of a bypass line with a compressor bypass valve 10, wherein a boost pressure p₂' can be adjusted by this compressor bypass valve 10 and with that boost pressure p₂' least one combustion chamber 3 can be filled.

By changing the boost pressure p₂', it is possible to vary the filling of at least one combustion chamber 3.

In addition, the turbocharger 14 has an exhaust turbine 13 that can be bypassed by a bypass line along with the turbine bypass valve 12.

By means of this turbine bypass valve 12, an exhaust backpressure p₃' can be set which acts on the at least one combustion chamber 3.

A control unit 2 is provided which is signal conductively connected by means of signal conducting connections 6, on the one hand to the compressor bypass valve 10 of the compressor 11 and on the other hand to the turbine bypass valve 12 of the exhaust turbine 13.

Furthermore, the control unit 2 is signal conductively connected with the combustion chamber 3 to control or monitor the combustion process. Via this signal connection 6 it would also be possible for the control unit 2 e.g. to vary or control an ignition timing of the combustion by an ignition source, preferably a spark plug.

The compressor bypass valve 10 of the compressor 11 (and also of the mixture cooler 15) in this embodiment is configured as an actuator 4 that influences combustion parameters.

The turbine bypass valve 12 of the exhaust turbine 13 in this embodiment forms the actuator 5 that influences the exhaust backpressure p₃'.

The control unit 2 is configured to actuate the at least one actuator 4 (in this embodiment the compressor bypass valve 10 of the compressor 11) that influences the boost pressure p₂'.

As, already described in the beginning, fuel sources such as natural gas from a public supply grid can contain a certain amount of hydrogen, a method for operating the internal combustion engine is provided to react on varying contents of hydrogen in the air-fuel mixture according to the invention.

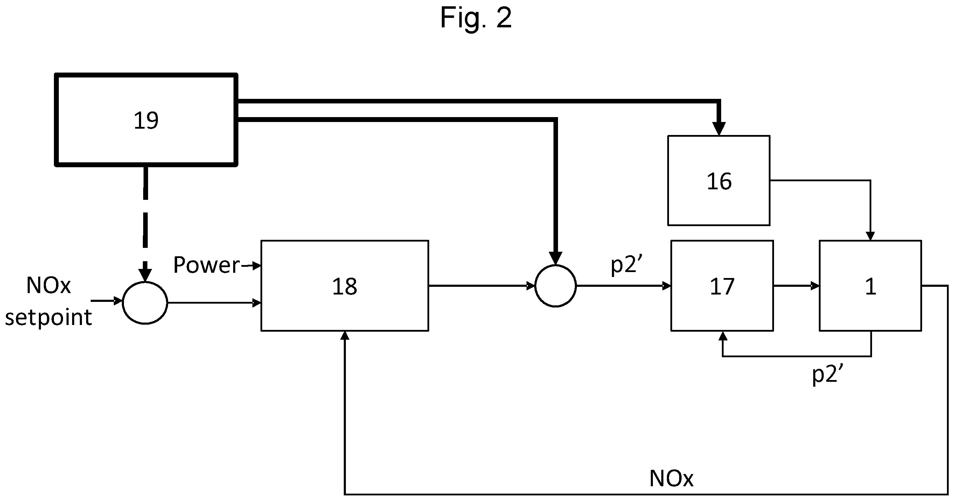

An embodiment of such a method for operating an internal combustion engine 1 is shown by Fig. 2.

Fig. 2 illustrates a schematic overview of a method for operating an internal combustion engine 1.

In this embodiment the control unit 2 is split up into an ignition timing control module 16 and a boost pressure control module 17, wherein an ignition timing of the combustion in the combustion chamber 3 and a boost pressure of the air-fuel-mixture delivered to the combustion chamber 3 can be controlled.

The boost pressure setpoint p₂' is provided by a calculation unit 18 to the boost pressure control module 17, wherein the calculation unit 18 calculates a boost pressure setpoint based on a given NOx setpoint and a power requirement of the internal combustion engine 1.

The calculation unit 18 could for example be embodied as the regulating device disclosed in EP 2 977 596 B1.

The ignition timing setpoint is given by the hydrogen control unit 19.

The hydrogen control unit 19 is configured to:
- determine a hydrogen content of the fuel mixture,
- adapt an ignition timing as a function of the hydrogen content of the fuel mixture independent of a target power output of the internal combustion engine 1,
wherein the higher the amount of hydrogen in the fuel mixture the later the ignition timing is set to compensate a shift of center of combustion due to higher flame speed of hydrogen compared to the first fuel.

"Independent of a target power output" in this context is to be understood that the ignition timing is not adapted in order to change a target power output of the internal combustion engine, e.g. in the case of a change in load, but is adapted depending on the hydrogen amount in the fuel mixture. Of course, it can be necessary to adapt the ignition timing in reaction of a change in load, but such a reaction is different to the adaption of the ignition timing depending on the hydrogen amount in the fuel mixture to compensate for a change of combustion speed of the fuel mixture.

Furthermore, it can be provided that the hydrogen control unit 19 is configured to influence the target NOx amount, wherein the higher the amount of hydrogen in the fuel mixture the higher a boost pressure target value is set to meet a target NOx amount in the exhaust gas of the internal combustion engine 1, wherein indirectly via the calculation unit 18 the boost pressure setpoint p₂' is controlled to meet the requirements of the NOx setpoint.

It can also be provided that the hydrogen control unit 19 is configured to directly vary the boost pressure setpoint p₂' to influence the lambda value.

The
- ignition timing control module 16,
- boost pressure control module 17,
- calculation unit 18 and/or
- hydrogen control unit 19
can be embodied as separate hardware components and/or software modules. In other preferred embodiments these modules are partially or fully integrated with each other as one or more software modules being executed on one or more hardware components.

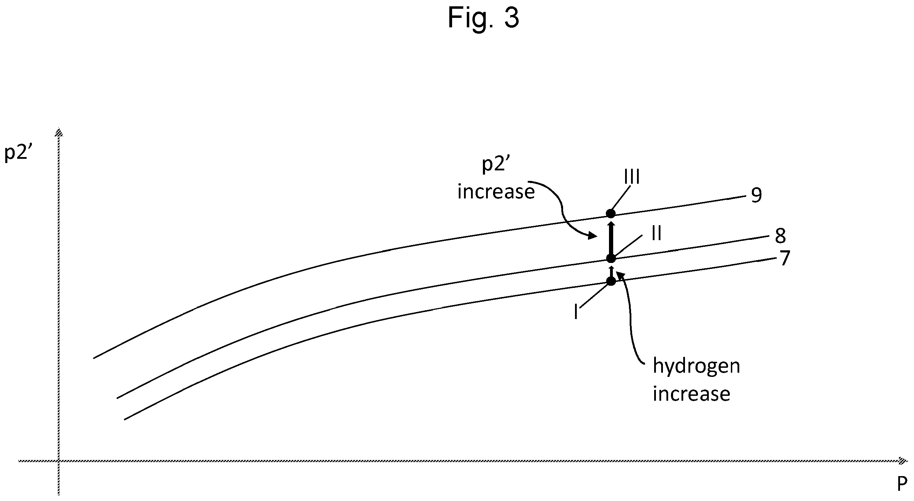

Fig. 3 illustrates a method for operating an internal combustion engine 1 during a change of a hydrogen content in the fuel mixture by a diagram.

The diagram shows therefore a connection between a boost pressure setpoint p₂' (ordinate) and a power output (abscissa) of an internal combustion engine 1 for different air-fuel mixtures (indicated by the lines a, b and c).

Line 7 discloses an operation by an air-fuel mixture of charged air and natural gas, wherein the internal combustion engine 1 is operated at an operating point I to reach a required power output P.

If the fuel provided, e.g. by a public supply grid, changes to a fuel mixture comprising natural gas and a content of hydrogen (as shown by line 8) the internal combustion engine 1 has to be transferred to operation point II to deliver continuous power output P.

As such a variation of the hydrogen content in the fuel mixture of the air-fuel mixture appears, according to the invention it is provided to control the ignition timing, wherein the higher the amount of hydrogen in the fuel mixture the later the ignition timing is set to compensate a shift of center of combustion due to higher flame speed of hydrogen compared to the first fuel, i.e. operation point I in this example.

Furthermore, as can be seen in Fig. 3 the boost pressure is increased during the increase of hydrogen, wherein the lambda value is changed. By this increase of the boost pressure p₂' the control of the ignition timing to late and the increase of hydrogen content can be compensated to keep the power output constant and reach operation point II, line 8, indicating a specific lambda value for a specific hydrogen content of a fuel mixture.

Starting from the operating point II, the boost pressure p₂' can be increased further, wherein line 9 - indicating an air-fuel mixture with a different lambda value but the same fuel-mixture as line 8 - can be reached.

As the boost pressure p₂' of an air-fuel mixture starting in operation point II is increased, wherein the certain fuel mixture mass is kept constant, also the lambda value is increased until an operation point III is reached, wherein the NOx emissions can be reduced while still having the same power output P.

The different relationships between the boost pressure p2', the power output P, a lambda value, and a NOx content can be stored in the control unit 2, e.g. in the form of Fig. 3.

### List of used reference signs:

- 1: internal combustion engine
- 2: control unit
- 3: combustion chamber
- 4: actuator
- 5: actuator
- 6: signal conductive connection
- 7: line
- 8: line
- 9: line
- 10: compressor bypass valve
- 11: compressor
- 12: turbine bypass valve
- 13: exhaust turbine
- 14: turbocharger
- 15: mixture cooler 15
- 16: ignition timing control module
- 17: boost pressure control module
- 18: calculation unit
- 19: hydrogen control unit

## Claims

1. Method for operating an internal combustion engine (1), wherein the internal combustion engine (1) is operated by an air-fuel mixture comprising a fuel mixture and air, wherein the fuel mixture comprises a first fuel, preferably natural gas, and hydrogen as a second fuel different from the first fuel, wherein
- a hydrogen content of the fuel mixture is determined, and
- at least an ignition timing is adapted as a function of the hydrogen content of the fuel mixture independent of a target power output of the internal combustion engine (1),
wherein the higher the amount of hydrogen in the fuel mixture the later the ignition timing is set for at least partially compensating a shift of a center of combustion due to higher flame speed of hydrogen compared to the first fuel,
**characterised in that** the hydrogen content of the fuel mixture is estimated, preferably continuously, by means of an in-cylinder pressure sensor and/or an exhaust gas temperature sensor.

2. Method according to claim 1, wherein the higher the amount of hydrogen in the fuel mixture the higher a boost pressure target value is set to meet a target NOx amount in the exhaust gas of the internal combustion engine (1).

3. Method according to one of the preceding claims, wherein a lambda value of the combustible air-fuel mixture supplied to the internal combustion engine (1) is adapted during a change of the amount of hydrogen in the fuel mixture, preferably for at least partially compensating the increase of the boost pressure without changing an actual power output of the internal combustion engine (1).

4. Method according to at least one of the preceding claims, wherein a lambda value of the combustible air-fuel mixture supplied to the internal combustion engine (1) is increased during an increase of the amount of hydrogen in the fuel mixture beyond an increase of a lambda value when using only the first fuel.

5. Method according to at least one of the preceding claims, wherein depending on the amount of hydrogen in the fuel mixture a target NOx amount in the exhaust gas of the internal combustion engine (1) is held constant or is adapted, preferably decreased.

6. Method according to claim 5, wherein the target NOx amount in the exhaust gas of the internal combustion engine (1) is set below a target NOx amount compared to a target NOx amount when using only the first fuel.

7. Method according to at least one of the preceding claims, wherein the amount of fuel mixture is adapted to compensate the difference in a heating value of hydrogen compared to the first fuel, preferably natural gas.

8. Method according to at least one of the preceding claims, wherein the boost pressure target value is adapted depending on the amount of hydrogen in the fuel mixture.

9. Method according to at least one of the preceding claims, wherein a boost pressure is adapted in a feedback control as a function of a continuously measured NOx content of the exhaust gas of the internal combustion engine (1).

10. Method according to at least one of the preceding claims, wherein a boost pressure or a boost pressure offset is adapted as a function of the amount of hydrogen in the fuel mixture.

11. Method according to at least one of the preceding claims, wherein the hydrogen content of the fuel mixture is determined, preferably continuously, by means of a hydrogen sensor.

12. Internal combustion engine comprising a control unit being configured to operate the internal combustion engine (1) according to at least one of the preceding claims.

## Patentansprüche

1. Verfahren zum Betreiben einer Brennkraftmaschine (1), wobei die Brennkraftmaschine (1) mit einem Luft-Kraftstoff-Gemisch betrieben wird, das ein Kraftstoffgemisch und Luft umfasst, wobei das Kraftstoffgemisch einen ersten Kraftstoff, vorzugsweise Erdgas, und Wasserstoff als einen vom ersten Kraftstoff verschiedenen zweiten Kraftstoff umfasst, wobei
- ein Wasserstoffgehalt des Kraftstoffgemisches bestimmt wird und
- zumindest ein Zündzeitpunkt in Abhängigkeit vom Wasserstoffgehalt des Kraftstoffgemisches unabhängig von einer Sollleistung der Brennkraftmaschine (1) angepasst wird,
wobei je höher der Wasserstoffanteil im Kraftstoffgemisch ist, desto später wird der Zündzeitpunkt eingestellt, um eine Verschiebung des Verbrennungszentrums aufgrund der im Vergleich zum ersten Kraftstoff höheren Flammengeschwindigkeit des Wasserstoffs zumindest teilweise auszugleichen,
**dadurch gekennzeichnet, dass** der Wasserstoffgehalt des Kraftstoffgemischs vorzugsweise kontinuierlich mittels eines Zylinderdrucksensors und/oder eines Abgastemperatursensors geschätzt wird.

2. Verfahren nach Anspruch 1, wobei der Ladedruck-Sollwert umso höher eingestellt wird, je höher der Wasserstoffanteil im Kraftstoffgemisch ist, um einen Sollwert für den NOx-Gehalt im Abgas der Brennkraftmaschine (1) zu erreichen.

3. Verfahren nach einem der vorangehenden Ansprüche, wobei ein Lambda-Wert des der Brennkraftmaschine (1) zugeführten brennbaren Luft-Kraftstoff-Gemisches während einer Änderung des Wasserstoffanteils im Kraftstoffgemisch angepasst wird, vorzugsweise um den Anstieg des Ladedrucks zumindest teilweise zu kompensieren, ohne die tatsächliche Leistungsabgabe der Brennkraftmaschine (1) zu verändern.

4. Verfahren nach mindestens einem der vorangehenden Ansprüche, wobei ein Lambda-Wert des der Brennkraftmaschine (1) zugeführten brennbaren Luft-Kraftstoff-Gemisches während einer Erhöhung des Wasserstoffanteils im Kraftstoffgemisch über eine Erhöhung eines Lambda-Wertes bei Verwendung nur des ersten Kraftstoffs hinaus erhöht wird.

5. Verfahren nach mindestens einem der vorangehenden Ansprüche, wobei in Abhängigkeit vom Wasserstoffanteil im Kraftstoffgemisch ein Soll-NOx-Gehalt im Abgas der Brennkraftmaschine (1) konstant gehalten oder angepasst, vorzugsweise verringert, wird.

6. Verfahren nach Anspruch 5, wobei der Soll-NOx-Gehalt im Abgas der Brennkraftmaschine (1) unter einem Soll-NOx-Gehalt im Vergleich zu einem Soll-NOx-Gehalt bei ausschließlicher Verwendung des ersten Kraftstoffs eingestellt wird.

7. Verfahren nach mindestens einem der vorangehenden Ansprüche, wobei die Menge des Kraftstoffgemisches so angepasst ist, dass sie den Unterschied im Heizwert von Wasserstoff im Vergleich zum ersten Kraftstoff, vorzugsweise Erdgas, ausgleicht.

8. Verfahren nach mindestens einem der vorangehenden Ansprüche, wobei der Ladedruck-Sollwert in Abhängigkeit von dem Wasserstoffanteil im Kraftstoffgemisch angepasst wird.

9. Verfahren nach mindestens einem der vorangehenden Ansprüche, wobei ein Ladedruck in einer Rückkopplungsregelung als Funktion eines kontinuierlich gemessenen NOx-Gehalts des Abgases der Brennkraftmaschine (1) angepasst wird.

10. Verfahren nach mindestens einem der vorangehenden Ansprüche, wobei ein Ladedruck oder ein Ladedruck-Offset in Abhängigkeit von dem Wasserstoffanteil im Kraftstoffgemisch angepasst wird.

11. Verfahren nach mindestens einem der vorangehenden Ansprüche, wobei der Wasserstoffgehalt des Kraftstoffgemisches vorzugsweise kontinuierlich mittels eines Wasserstoffsensors bestimmt wird.

12. Brennkraftmaschine mit einer Steuereinheit, die so konfiguriert ist, dass sie die Brennkraftmaschine (1) gemäß mindestens einem der vorstehenden Ansprüche betreibt.

## Revendications

1. Procédé pour faire fonctionner un moteur à combustion interne (1), dans lequel le moteur à combustion interne (1) fonctionne avec un mélange air-carburant comprenant un mélange de carburants et de l'air, le mélange de carburants comprend un premier carburant, de préférence du gaz naturel, et de l'hydrogène en tant que second carburant différent du premier carburant, dans lequel
- une teneur en hydrogène du mélange de carburants est déterminée, et
- au moins un calage d'allumage est adapté en fonction de la teneur en hydrogène du mélange de carburants indépendamment d'une puissance de sortie cible du moteur à combustion interne (1),
dans lequel plus la quantité d'hydrogène dans le mélange de carburants est élevée, plus le calage d'allumage est réglé tardivement afin de compenser au moins partiellement un déplacement d'un centre de combustion dû à une vitesse de flamme plus élevée de l'hydrogène par rapport au premier carburant,
**caractérisé en ce que** la teneur en hydrogène du mélange de carburants est estimée, de préférence en continu, au moyen d'un capteur de pression dans le cylindre et/ou d'un capteur de température des gaz d'échappement.

2. Procédé selon la revendication 1, dans lequel plus la quantité d'hydrogène dans le mélange de carburants est élevée, plus une valeur cible de pression de suralimentation est réglée à un niveau élevé afin d'atteindre une quantité cible de NOx dans les gaz d'échappement du moteur à combustion interne (1).

3. Procédé selon l'une des revendications précédentes, dans lequel une valeur lambda du mélange air-carburant combustible fourni au moteur à combustion interne (1) est adaptée lors d'une variation de la quantité d'hydrogène dans le mélange de carburants, de préférence afin de compenser au moins partiellement l'augmentation de la pression de suralimentation sans modifier une puissance de sortie effective du moteur à combustion interne (1).

4. Procédé selon au moins l'une des revendications précédentes, dans lequel une valeur lambda du mélange air-carburant combustible fourni au moteur à combustion interne (1) est augmentée lors d'une augmentation de la quantité d'hydrogène dans le mélange de carburants au-delà d'une augmentation d'une valeur lambda lors de l'utilisation du premier carburant uniquement.

5. Procédé selon au moins l'une des revendications précédentes, dans lequel, en fonction de la quantité d'hydrogène dans le mélange de carburants, une quantité cible de NOx dans les gaz d'échappement du moteur à combustion interne (1) est maintenue constante ou est adaptée, de préférence diminuée.

6. Procédé selon la revendication 5, dans lequel la quantité cible de NOx dans les gaz d'échappement du moteur à combustion interne (1) est réglée en dessous d'une quantité cible de NOx par comparaison à une quantité cible de NOx lors de l'utilisation du premier carburant uniquement.

7. Procédé selon au moins l'une des revendications précédentes, dans lequel la quantité du mélange de carburants est adaptée afin de compenser la différence de pouvoir calorifique de l'hydrogène par rapport au premier carburant, de préférence le gaz naturel.

8. Procédé selon au moins l'une des revendications précédentes, dans lequel la valeur cible de pression de suralimentation est adaptée en fonction de la quantité d'hydrogène dans le mélange de carburants.

9. Procédé selon au moins l'une des revendications précédentes, dans lequel une pression de suralimentation est adaptée dans un contrôle par rétroaction en fonction d'une teneur en NOx des gaz d'échappement du moteur à combustion interne (1) mesurée en continu.

10. Procédé selon au moins l'une des revendications précédentes, dans lequel une pression de suralimentation ou un décalage de pression de suralimentation est adapté en fonction de la quantité d'hydrogène dans le mélange de carburants.

11. Procédé selon au moins l'une des revendications précédentes, dans lequel la teneur en hydrogène du mélange de carburants est déterminée, de préférence en continu, au moyen d'un capteur d'hydrogène.

12. Moteur à combustion interne comprenant une unité de commande configurée pour faire fonctionner le moteur à combustion interne (1) selon au moins l'une des revendications précédentes.
